Europäisches Patentamt

European Patent Office

Office européen des brevets

(19)

(11) Numéro de publication : **0 092 124**
**B1**

(12)

# FASCICULE DE BREVET EUROPÉEN

(45) Date de publication du fascicule du brevet :
03.12.86

(51) Int. Cl.⁴ : $D\ 21\ C\ \ 5/02$, $D\ 21\ B\ \ 1/32$

(21) Numéro de dépôt : 83103460.8

(22) Date de dépôt : 09.04.83

(54) Procédé de production de pâtes à papier partant d'un mélange de vieux papiers imprimés non sélectionnés.

(30) Priorité : 19.04.82 IT 6751482

(43) Date de publication de la demande :
26.10.83 Bulletin 83/43

(45) Mention de la délivrance du brevet :
03.12.86 Bulletin 86/49

(84) Etats contractants désignés :
AT BE CH DE FR GB IT LI LU NL SE

(56) Documents cités :
DE-A- 1 761 864
DE-A- 2 413 159
DE-A- 2 413 278
FR-A- 1 031 536
FR-A- 2 277 779
FR-A- 2 406 692
FR-A- 2 417 580
FR-A- 2 421 241
FR-A- 2 433 609
FR-A- 2 441 680
US-A- 2 757 085
US-A- 2 916 412
US-A- 3 099 570
US-A- 4 076 578
JAPANESE PATENTS REPORT, vol. 77, no. 23, 8 juillet 1977, page 92, no. TSS55786, Derwent Publications Ltd., London, G.B. "Ink removal from printed waste paper"
ABSTRACT BULLETIN OF THE INSTITUTE OF PAPER CHEMISTRY, vol. 51, no. 6, décembre 1980, page 680, no. 6252, Appleton, Wisconsin, USA
TAPPI JOURNAL OF THE TECHNICAL ASSOCIATION OF THE PULP AND PAPER INDUSTRY, vol. 63, no. 9, septembre 1980, pages 113-116, Atlanta, GA, USA;L. PFALZER: "Deinking of secondary fibers. A comparison of washing and flotation"

(73) Titulaire : **Clement, Jean Marie**
**Via Forze Armate 26**
**I-20147 Milano (IT)**

(72) Inventeur : **Clement, Jean Marie**
**Via Forze Armate 26**
**I-20147 Milano (IT)**

(74) Mandataire : **Buzzi, Franco et al**
**c/o Jacobacci-Casetta & Perani S.p.A. Via Alfieri, 17**
**I-10121 Torino (IT)**

## Description

La présente invention concerne un procédé pour le traitement des vieux papiers imprimés non sélectionnés en vue de leur recyclage.

Le recyclage des vieux papiers imprimés pour la fabrication du papier ou du carton est possible seulement après élimination de la masse fibreuse à traiter de la plupart des contaminants non fibreux qui y ont été introduits lors des différentes phases successives d'impression (carbone, pigments, liquides huileux véhicules de l'encre, résines de fixation, etc...) et lors des manipulations successives (couchage, laquage, reliure, plastification, emballage, etc...) et ensuite durant les phases de récupération (contamination par objets métalliques, plastiques, terre, souillures diverses).

L'élimination des contaminants a lieu par ordre chronologique dimensionnel, à travers différentes phases de passage sur tamis, triage manuel, magnétique, initialement à sec et ensuite en dispersion aqueuse.

La masse fibreuse ainsi dispersée est ensuite épurée des contaminants plus petits en un ou plusieurs étages d'épurateurs à tamis, centrifuges ou centripètes, utilisant les différences dimensionnelles ou de poids spécifique entre les contaminants et les fibres cellulosiques.

L'élimination de l'encre est effectuée en deux phases : (1) une phase de décrochement du mélange liant-pigment de la surface des fibres grâce à l'action simultanée d'agents de décrochage (savons, détergents, tensio-actifs), de la température, de la pression, et des forces mécaniques de cisaillement, dans un milieu alcalin qui favorise la sensibilisation de la paroi fibreuse par gonflement et ramollissement, et (2) une phase d'élimination de la suspension fibreuse des produits décrochés lors de la phase précédente.

En général, le décrochage des contaminants et de l'encre d'imprimerie de la surface des fibres est effectué lors de la mise en suspension aqueuse des vieux papiers. Ces derniers sont défibrés dans un appareil communément appelé pulpeur, en présence de soude caustique, d'agents de désencrage, de tensio-actifs, d'oxydants, à une température comprise entre 50 et 60 °C.

Dans une variante proposée par la société Voith, la pâte défibrée est épaissie à environ 15 % et mélangée alors aux produits chimiques de désencrage et de blanchiment, et portée à environ 60 °C. Cette pâte est ensuite abandonnée pendant 2 à 3 heures dans un tour de réaction sans être soumise à aucune sorte d'agitation.

Un premier inconvénient de ces procédés est dû au fait que tous les contaminants sont soumis au traitement thermique, y compris ceux qui présentent un bas point de fusion, tels que les adhésifs, les cires, les colles de reliure. Ces contaminants se disperseront donc dans la pâte et ne pourront plus être éliminés par les procédés classiques qui ont lieu à température plus basse, car ils se seront déjà refixés sur les fibres. Par contre, ils réapparaîtront sous forme de dépôts collants sur les racles des cylindres sécheurs de la machine à papier, ou sur les surfaces métalliques froides des tuyauteries, sur les toiles et les feutres, créant ainsi de multiples problèmes de fabrication et abaissant le rendement de la machine à papier.

Un second inconvénient de ces procédés est qu'ils sont peu efficaces lorsque l'on est en présence d'encres modernes type roto-offset, ou xérocopies, où les véhicules des pigments sont constitués par des résines synthétiques, du type alkydiques ou polythène, qui forment un film insoluble sur la surface des fibres, et insensible à la température de 60 °C et aux faibles énergies mises en jeu à ces basses concentrations.

Une autre limitation de ces procédés est due au fait qu'il n'est pas possible d'augmenter la température de la pâte au-dessus de 60 °C dans ces conditions d'alcalinité et de temps de contact sans risquer un rapide jaunissement de la pâte, surtout lorsqu'elle contient de la pâte mécanique.

Il existe deux méthodes fondamentales pour éliminer les particules d'encre préalablement décrochées, et précisément : (1) la flottation sélective, procédé par lequel on insuffle des bulles d'air dans la suspension fibreuse en présence d'un agent collecteur hydrophobe, lesquelles recueillent l'encre durant leur parcours ascendant vers la surface, utilisant les propriétés de différences de mouillabilité et de tension superficielle. La mousse ainsi formée est ensuite recueillie et traitée séparément, et (2) le lavage, procédé classique par lequel les éléments les plus fins sont entraînés dans les effluents d'égouttage provenant d'un ou plusieurs étages de dilution et d'essorage en cascade, en général à contre-courant. Ces effluents, contenant l'encre concentrée mais aussi beaucoup de fibres de cellulose et de charges minérales, quittent le procédé et sont traités en fonction des normes anti-pollution en vigueur en matière de décharge industrielle.

D'autres procédés expérimentaux existent, comme par exemple l'extraction par solvant, qui n'ont toutefois pas donné lieu à d'application industrielle digne d'intérêt, soit par suite du coût élevé du procédé, soit par la basse qualité du produit fini.

Dans le brevet américain N° 4 076 578 Ira Puddington et Al., de Ontario Paper Company reprend la description des concepts du désencrage en deux étapes : (a) un décrochement par action chimico-thermo-mécanique et (b) une élimination des particules d'encre de la suspension fibreuse, tout en proposant un autre moyen de réaliser cette opération, par adsorption de l'encre sur la surface de particules solides, suivie de l'élimination de ces particules solides.

Aujourd'hui, aucun des procédés principaux susnommés ne s'est particulièrement imposé, car chacun d'eux présente des inconvénients. Dans le cas de la flottation, la séparation de l'encre a lieu en milieu très dilué (concentrations entre 1 % et 2 %) et conduit à traiter de grands volumes de suspension fibreuse, et par conséquent d'un coût d'investissement relativement élevé.

En outre, la nature même de ce procédé étant essentiellement physico-chimique, sa stabilité est liée en premier lieu à la constance de la matière première, en particulier au type de pâte (chimique ou mécanique) et à son contenu en charges minérales, et en second lieu à la constance de la teneur en ions Calcium de la suspension fibreuse. En conséquence, la blancheur du produit fini présente d'importantes fluctuations. Ces variations de blancheur sont également accompagnées de toutes les variations de composition (pâte chimique, mécanique, fines, charges) déjà présentes dans la matière première (vieux papiers de récupération), incontrôlables et non mesurables en continu. Or, s'il est bien démontré que le bon fonctionnement des machines à papier modernes est lié avant tout à la constance de leur alimentation, il est évident que l'on ne peut contrôler la composition d'un lot de vieux papiers aussi facilement que celle d'une balle de pâte vierge.

La diminution sensible du rendement des machines à papier rapides qui utilisent la pâte désencrée par flottation comme matière première principale (par exemple pour fabriquer du papier journal) est en fait due beaucoup plus à ces variations de composition qu'aux variations de blancheur ou de propreté (poivrage) attribuées à la flottation proprement dite. Seule l'utilisation de vieux papiers préalablement triés et sélectionnés permet d'atténuer ce problème, mais leur coût (et leur disponibilité non assurée) les rend peu compétitifs par rapport à la pâte vierge.

Ce procédé nécessite en outre une surveillance continue de la part d'un laboratoire de chimie hautement spécialisé et par conséquent coûteux.

Dans le cas du lavage, en particulier lorsqu'il est effectué à moyenne concentration, c'est-à-dire entre 3 % et 15 %, les installations sont plus simples, plus compactes et plus propres. Ce procédé ne nécessite aucun contrôle spécialisé et la qualité du produit fini s'est démontrée supérieure à celle obtenue par flottation, mais surtout plus constante et peu sensible aux variations de qualité de la matière première.

En effet, le principe même du lavage sur tamis garantit statistiquement que tous les éléments dont la dimension est inférieure à celle des mailles passent au travers de celles-ci. Il apparaît donc que les variations quantitatives d'éléments fins (fines et pâte mécanique) et de charges minérales se répercuteront dans la fraction perdue avec l'effluent de lavage, en offrant un produit lavé de composition constante. Ceci permet en outre d'utiliser des vieux papiers moins nobles donc moins coûteux.

Par contre, le procédé par lavage nécessite l'utilisation d'une plus grande quantité d'eau fraîche, et produit par conséquent une plus grande quantité d'effluents qui contiennent encore d'intéressantes quantités de fibres cellulosiques et de charges minérales qui sont donc perdues, au détriment du rendement matière du procédé, donc du prix de revient du produit fini. En outre, le traitement anti-pollution de ces effluents représente un coût non productif additionnel.

Si l'on peut donc opposer au procédé par flottation son prix de revient élevé en investissements et produits chimiques, ainsi qu'une inconstance du produit final, on peut opposer au procédé par lavage un prix de revient élevé par suite de la perte en poids et du coût ultérieur de traitement des effluents.

Dans le but de chercher à atténuer les inconvénients de chacun de ces deux procédés fondamentaux, leurs défenseurs respectifs en ont proposé diverses combinaisons.

C'est ainsi que M. Fritz Zeeb, de la société Voith propose dans sa demande de brevet publication FR 2 433 609 d'éliminer les charges minérales et la fraction à fibres courtes contenues dans une pâte ayant subi un traitement de désencrage par flottation au moyen de tamis de triage et de lavage. Ce procédé sommairement décrit et sans exemple, semble sommer les prix de revient du lavage et de la flottation ainsi que leurs inconvénients ; on peut alors se demander où réside l'intérêt de faire précéder un lavage par une flottation.

Dans la revue TAPPI Vol. 63, N° 9, septembre 1980, M. Lothar Pfalzer, de la même société Voith, rappelle ce même concept page 116 schéma 3, en précisant toutefois que les charges minérales, les fibres courtes et l'encre sont centrifugées et perdues. M. Pfalzer, indique également que l'effluent doit être acidifié pour en permettre la sédimentation après avoir précisé qu'une bonne dispersion de l'encre (nécessaire au bon fonctionnement du lavage) ne peut être obtenue qu'en milieu basique à pH strictement contrôlé. Ces deux nécessités contradictoires rendent ce concept non réalisable en pratique.

Dans le même article, page 114 schéma 1, M. Pfalzer propose la thèse exactement opposée, c'est-à-dire de flotter et sédimenter totalement les effluents d'un procédé conventionnel de désencrage par lavage. Pour les mêmes motifs que ceux exposés précédemment, à savoir que le rendement matière est toujours celui (assez bas) du lavage, que le coût de l'installation est toujours la somme des coûts des deux procédés, et que les pH entre la sédimentation et l'ensemble lavage plus flottation sont totalement incompatibles, cette proposition n'a pas reçu d'application industrielle.

Dans sa demande de brevet, publication FR 2 406 692, M. Calmanti de la société Montedison propose encore plus simplement de séparer l'encre du mélange fibreux que constitue l'effluent de lavage par simple injection d'air sans aucune addition de floculant, et de recycler en amont du lavage les eaux ainsi « clarifiées » contenant encore toutes les fibres, les fines et les charges perdues lors du lavage. Une tentative d'application de ce procédé a dû être immédiatement abandonnée. En effet, en admettant qu'il soit possible de réaliser une flottation sélective de la seule encre dans ces conditions, il n'est par contre pas possible de recirculer indéfiniment les fines et les charges minérales perdues au cours du lavage, sans éviter une saturation rapide des cycles de lavage, ayant pour conséquence une chute brutale de l'effet de désencrage et de la capacité hydraulique des éléments d'essorage (colmatage). Pour remédier à cet inconvénient, il a fallu ouvrir le circuit des solides en suspension en ne les recirculant plus avec les effluents, en les faisant floculer et flotter intégralement, procédé classique.

Dans la demande de brevet italien N° 26944-A/80, M. Calmanti reprend la même thèse : les effluents du lavage, à une concentration citée pour exemple de 1,4 g/litre, y seraient soumis à une flottation par simple insufflation d'air, et seraient ensuite recyclés avec tout leur contenu de fibres et de charges minérales. Une troisième flottation, dite « rapide », serait ajoutée avant le lavage, mais cette solution ne résoud en rien la rapide saturation conduisant à l'arrêt de la ligne de désencrage par suite du colmatage des éléments d'égouttage, ou à l'ouverture du circuit des effluents.

But de l'invention

L'objet de l'invention est décrit dans les revendications 1 à 30.

La présente invention a pour but principal la réalisation d'un procédé industriel intégral permettant de produire de façon continue et séparément, à partir de vieux papiers imprimés non sélectionnés :

a) une pâte totalement épurée et désencrée, à blancheur et classification fibreuse constantes et contrôlées, à taux de charges très faible et constant ;

b) une pâte totalement épurée et relativement bien désencrée, à classification fibreuse relativement fine et taux de charges élevés, tous deux variables en valeur instantanée ;

c) un effluent ne contenant pratiquement pas de matières en suspension, n'ayant subi aucune inversion de pH, ne contenant pas de coagulants de floculation ou de sédimentation, et donc directement et intégralement réutilisable comme liquide de lavage et de dilution.

Un autre but de la présente invention est celui de permettre le bon désencrage des types de papier non désencrables par les procédés actuels (offset, xérox) tout en permettant l'obtention d'un degré de blancheur supérieur à celui de la matière première non imprimée.

Un autre but de la présente invention est celui de permettre l'utilisation de vieux papiers de basse qualité dans la fabrication de papiers fins ou sur des machines à grande vitesse.

La présente invention a pour but en particulier la modification, l'adaptation et l'application des divers procédés de lavage, de séparation sélective de l'encre, et/ou flottation, coagulation et filtration, sur le mélange fibreux à haute teneur en encre que constitue l'effluent du procédé primaire d'élimination de l'encre.

Un but ultérieur de la présente invention est de permettre la réutilisation à des fins papetières nobles des sous-produits du désencrage par lavage, et ceci dans une unité de production qui peut être différente de celle qui en utilise le produit principal, revalorisant ainsi ces sous-produits.

Un autre but de la présente invention est celui de pouvoir prélever, grâce au stockage à concentration élevée, un débit constant et contrôlé de ces produits qui, après avoir été remis en mélange avec le produit principal, permettent de regénérer la composition de base ou tout autre composition désirée, de la maintenir constante dans le temps, la capacité de stockage servant alors de tampon absorbant les variations incontrôlées présentes en amont du circuit.

Un but ultérieur de la présente invention est de valoriser le sous-produit de la ligne satellite par le fait que l'on peut utiliser les fibres mêmes provenant de la ligne principale pour optimiser le fonctionnement de la séparation sélective de l'encre et de la filtration sur couche fibreuse.

Un autre but de l'invention est celui d'effectuer la séparation sélective de l'encre dans un mélange où cette encre est très concentrée, en augmentant de cette manière l'efficacité des produits chimiques.

Un but ultérieur de la présente invention est celui d'effectuer la séparation sélective de l'encre c'est-à-dire la phase la plus délicate de tout le procédé de recyclage, dans un circuit satellite de capacité réduite (environ 30 % de la capacité de la ligne principale), de conduite plus facile et nécessitant de moindres coûts d'investissements et d'exploitation.

Un autre but de la présente invention est celui d'assurer une constance de qualité de la pâte produite dans le circuit principal, grâce au fait que d'éventuelles fluctuations ou difficultés de conduite du circuit satellite se répercuteront seulement sur la fraction produite par ce dernier circuit.

Description de l'invention

La description de détail suivante concerne un exemple de réalisation pratique du procédé objet de l'invention, se référant au schéma joint, fourni à pur titre d'exemple non limitatif, et qui illustre sous forme de diagramme à blocs un procédé pour le traitement de vieux papiers imprimés non sélectionnés en vue de leur recyclage, selon l'invention en objet.

En suivant le schéma, les vieux papiers sont introduits dans un désintégrateur (2) par un mécanisme de chargement (1) ainsi que de l'eau et éventuellement un alcali pour porter le pH à des valeurs supérieures à environ 7. Il est possible, mais non indispensable, d'ajouter pendant cette phase de désintégration tout ou partie des produits chimiques nécessaires au décrochage de l'encre. La pâte subit ensuite une dilution, est envoyée par pompage dans divers étages de classeurs et/ou d'épurateurs (3) afin de décrocher les corps étrangers des fibres et de les éliminer de la suspension fibreuse.

Lorsque la pâte désencrée est utilisée pour la fabrication de papiers fins ou sur des machines fonctionnant à grande vitesse, comme par exemple du support de couche ou du papier journal, l'épuration doit être effectuée selon les mêmes critères que pour une pâte chimique ou mécanique vierge, utilisant le même matériel et les mêmes paramètres de fonctionnement. En particulier les meilleurs résultats ont été obtenus avec des épurateurs sous pression du type classeurs équipés avec des paniers à fentes de 0,3 mm de largeur travaillant à concentration de 1 %, suivis d'épurateurs centrifuges type cleaners « Tricleans 4 inches » (marque commerciale de la société BELOIT) travaillant avec une perte de charge de 2,8 bars et une concentration de 0,6 % maximum à l'entrée du premier étage.

Quoi qu'il en soit, il est absolument fondamental que la température de la pâte pendant cette épuration soit maintenue la plus basse possible afin d'éviter le ramollissement des contaminants les plus sensibles à la température, leur conséquente extrusion à travers les fentes des épurateurs et leur passage dans la pâte acceptée, d'où il deviendrait impossible de les éliminer.

La pâte est ensuite épaissie en (4) à la concentration requise par le procédé successif de décrochage de l'encre. Les effluents produits lors de cette phase, froids et pauvres en encre, peuvent être entièrement recyclés. Lors de la phase de décrochage de l'encre (5), le mélange fibreux subit un réchauffage après y avoir introduit un alcali pour porter le pH au-dessus de 9, un agent oxydant (par exemple du peroxyde d'hydrogène), un agent de stabilisation de l'oxydant (par exemple du silicate de sodium), un agent de dispersion (tensio-actif), ou tout autre agent chimique spécifique du décrochage de l'encre et de son élimination successive. Ce traitement sera conduit (température, pression, énergie, dosage des produits chimiques) de façon à ce que l'encre soit totalement décrochée de la surface des fibres. La pâte est ensuite envoyée dans un cuvier (6) pendant 5 à 20 minutes, dans lequel on procède à une dilution jusqu'à 2 %-5 % avec tout ou partie des effluents du lavage traités par le procédé (12) décrit plus loin.

Dans les exemples d'applications qui suivent, le traitement (5) est effectué dans un appareil industriel appelé « triturateur » ou encore « désintégrateur », qui permet de porter la pâte à la température désirée (c'est-à-dire à la température de fluidification des agents véhicules de l'encre d'imprimerie) en quelques secondes, et d'appliquer simultanément une intense énergie spécifique pendant quelques minutes à très haute concentration en présence des agents de décrochage et de dispersion de l'encre et des agents de blanchiment.

Cette extrême brièveté du traitement permet d'éviter le jaunissement de la pâte malgré la très haute température et la forte alcalinité de la suspension fibreuse.

La pâte subit ensuite un éventuel traitement d'ouverture à travers un dépastilleur (7) dans le but de bien séparer les fibres entre elles et de faciliter ainsi le décrochage de l'encre encore liée aux agglomérats fibreux. La suspension fibreuse subit ensuite le lavage final (8) qui n'est autre qu'une succession d'essorages et de dilutions en cascade, en général à contre courant.

Le nombre d'étages de lavage dépend de la quantité d'encre présente dans la pâte à traiter et du degré de blancheur final désiré.

Cet essorage, ou épaississement, a lieu à travers une toile, un tamis, une grille ou une plaque perforée et la dimension des espaces vides de ces éléments de filtration sera déterminée de façon à consentir un juste entraînement de matière fibreuse dans les effluents, afin d'assurer le bon fonctionnement du traitement successif d'élimination finale de l'encre ainsi que de la filtration sur couche de la masse fibreuse récupérée.

Dans le cas où l'on désire éliminer les charges minérales de la pâte secondaire ainsi récupérée des effluents du lavage (8), on pourra soumettre ces mêmes effluents à un second traitement de filtration (9) sur une toile plus fine que celle utilisée précédemment. Par ce moyen, on peut éliminer jusqu'à 80 % des charges minérales présentes dans les vieux papiers. Dans ce cas, la fraction enrichie en charges minérales est envoyée à une clarification alcaline totale conventionnelle (10) et ensuite à la décharge, les eaux clarifiées sont retournées alors à la ligne satellite, en amont de la séparation sélective (11) ou de la filtration (12).

Les effluents du lavage (8) et la fraction fibreuse de l'éventuelle filtration (9) sont ensuite envoyés au traitement de séparation sélective de l'encre (11), après y avoir introduit les réactifs chimiques nécessaires.

Le traitement (11) peut être du type à flottation sélective et dans ce cas, il sera nécessaire d'introduire des collecteurs de l'encre, comme par exemple des acides gras tel l'acide stéarique, tels quels ou déjà saponifiés sur base sodium ou calcium. Dans ce cas, il est conseillé de prévoir un temps de contact entre pâte et collecteurs d'environ 5 minutes et de maintenir la température du mélange entre 35 et 45 °C. Il convient de rappeler que les agents chimiques de dispersion utilisés pour microniser l'encre d'imprimerie avant le lavage ont un effet néfaste sur l'action de coagulation des agents collecteurs, ainsi que sur la filtrabilité du matelas fibreux. Il conviendra donc, si l'on désire obtenir une blancheur maximale après flottation, de les neutraliser ou de les précipiter par exemple par addition de chlorure ou d'hydroxyde de calcium. Cette précipitation aura aussi un effet bénéfique sur la blancheur de la pâte satellite par le fait que le silicate de sodium est ainsi transformé en charge minérale précipitée. On a également observé que selon le type d'agent collecteur utilisé, le taux d'élimination des charges minérales lors de la flottation peut varier de 30 % à 70 %.

La mousse produite dans la ou les cellules de flottation est ensuite traitée en (13) par des procédés conventionnels tels que centrifugeuses, filtre-presses, etc... Cette mousse représente une perte en poids de 10 % à 20 % de la quantité traitée par le circuit secondaire, c'est-à-dire de 3 % à 6 % de la quantité traitée par le circuit principal alimentant le lavage (8).

On a aussi observé que le maximum d'efficacité de la flottation sélective de l'encre est obtenu à des concentrations bien supérieures à celles recommandées par les constructeurs en cellules. On a par exemple observé qu'une cellule prévue pour fonctionner à une concentration de 1 % présentait un maximum d'efficacité entre 1,5 % et 2 %. Cette particularité permet donc de traiter de plus faibles volumes d'effluents, d'augmenter l'efficacité du traitement de lavage (8) grâce à une augmentation de la dimension des espaces vides des toiles ou des tamis.

Lorsque l'augmentation de concentration à réaliser est importante (par exemple + 0,5 %), on pourra prélever directement une faible quantité de pâte épaisse à moyenne concentration dans le cuvier (6) précédant le lavage (8). En opérant de cette façon, on introduira dans le circuit secondaire une petite quantité de fibres longues qui participeront par la suite à la formation de la couche filtrante (12).

Le traitement d'élimination de l'encre (11) peut être aussi constitué d'un procédé de type adsorption sélective de l'encre sur la surface de corps solides de petites dimensions, selon un procédé déjà proposé par Puddington et Al., U.S. Patent N° 4 076 578.

La pâte désencrée provenant du traitement (11) subit ensuite un épaississement par filtration sur couche fibreuse jusqu'à au moins 4 % de concentration. Il est toutefois conseillé de dépasser 10 % de façon à éliminer de la pâte la plus grande quantité possible de sels dissous. Dans le cas de suspensions fibreuses fortement alcalines et riches en fibres courtes, typiques d'un effluent de lavage de papier journal ou de revues, l'épaississement ne pourra avoir lieu qu'après réduction du pH à des valeurs comprises entre 7 et 8 (par exemple par addition d'acide sulfurique de préférence au sulfate d'aluminium) sous intense agitation mécanique (par exemple sur l'aspiration d'une pompe centrifuge), et après addition de fibres longues désencrées prélevées en fin de cycle de lavage (8) et servant à former la couche filtrante fibreuse.

Il a été observé que l'épaississement effectué à travers un matelas fibreux, par exemple filtre à disques Polydisk (marque commerciale de la société BELOIT), filtre à bande Waco (marque commerciale de la société ZEISS), ou filtre presse, permet d'obtenir un effluent à très basse teneur en solides en suspension (de 50 à 100 ppm) et donc directement réutilisable pour effectuer le lavage (8) sans risque de colmatage ou de saturation.

La pâte secondaire épaissie en (12) subit ensuite une acidification de préférence à l'acide sulfurique jusqu'à un pH d'environ 7 et est alors prête pour l'utilisation finale.

Exemples

Les exemples décrits ci-après sont la représentation quantitative et qualitative d'applications industrielles du procédé illustré précédemment, utilisant trois matières premières différentes et produisant trois papiers différents.

Les mesures de blancheur ont été effectuées avec un appareil Zeiss, type « Elrepho » (marque commerciale Zeiss) muni d'un filtre de 457 nm selon la méthode I.S.O.

Les dosages des produits chimiques sont exprimés en pourcentages à 100 % de produit actif par rapport au poids sec de pâte dans la ligne considérée, sauf pour le silicate de sodium qui est considéré tel quel à 1,36 $g/cm^3$ et les produits commerciaux dont les teneurs en matières actives ne sont pas divulguées.

Exemple 1

La matière première est constituée d'un mélange équipondéral de vieux journaux et d'annuaires téléphoniques (blancs et jaunes). Les pâtes désencrées produites sont utilisées dans la fabrication de papiers pour journaux et annuaires téléphoniques (blancs et jaunes) sur une même machine à papier moderne à grande vitesse (plus de 900 mètres/minute et largeur supérieure à 7 m).

Dans cette installation, le désintégrateur (2) a une capacité de 46 $m^3$ et la charge (1) de vieux papiers est de 2 700 kg par cycle de 30 minutes. L'eau nécessaire au remplissage est composée de la totalité des effluents de la phase d'épaississement (4) et le complément (si nécessaire) est prélevé dans le cuvier des filtrats clairs du filtre à disques (12). On y ajoute également 1 % de soude caustique ainsi que 1 % d'un agent de décrochage de l'encre, par exemple le Removink L8001 (marque commerciale de la société Chemicart, Milan). Après défibrage à froid, la pâte est totalement épurée et classée par des procédés conventionnels, et ensuite épaissie en (4) à une concentration de 30 % en deux étapes : de 0,6 % à 12 % à travers un filtre à disques, et ensuite de 12 % à 30 % à l'aide d'une presse à vis.

L'épuration est d'abord effectuée à moyenne concentration (3,5 %) à travers un cyclone de 300 mm de diamètre et ensuite à travers un turboséparateur équipé d'une plaque perforée à trous de 3 mm de diamètre. Les rejets de cet appareil sont traités par un tamis vibrant plat dont la plaque est aussi percée à 3 mm, et les rejets de ce dernier épurateur sont envoyés à la décharge.

La pâte acceptée par le turboséparateur est diluée à environ 1 % avant d'être classée par des épurateurs sous pression équipés de paniers à fentes de 0,3 mm de largeur. Les rejets de cet épurateur sont traités par un second étage ayant les mêmes caractéristiques, et les rejets de ce dernier passent sur un tamis vibrant plat dont la plaque possède les mêmes fentes que précédemment. Les rejets de ce troisième étage sont envoyés à la décharge.

La pâte acceptée par le premier étage de classeurs à fentes est à nouveau diluée à moins de 0,6 % afin de subir une épuration centrifuge et centripète très poussée dans une batterie de 4 étages d'épurateurs type Tricleans 4 inches. Les rejets lourds et légers du dernier étage sont envoyés à la décharge.

La perte en poids pendant ce traitement d'épuration représente de 6 % à 9 % de la pâte à traiter, selon le degré de contamination du mélange de vieux papiers.

La pâte ne présente plus aucune tache, agglomérat fibreux ou autre impureté visible et cette impression est confirmée par le test Sommerville, qui donne moins de 0,2 % de rejets, valeur correspondant à une bonne pâte mécaniques pour support de couche.

Les caractéristiques de la pâte à ce moment sont les suivantes : blancheur 40-45 °ISO, engraissement 50-55 °SR, taux de charges 6-8 %, température 20-25 °C.

La pâte subit ensuite un traitement spécial (5) de décrochage de l'encre dans un appareil appelé triturateur avec les paramètres suivants : température : 95 °C, soude caustique 1,5 %, silicate de sodium à 38 °Bé : 4 %, peroxyde d'hydrogène : 1,8 %, énergie spécifique = 80 KWH/Tonne pendant 3 minutes. A la fin de ce traitement, la blancheur est de 50-55 °ISO et l'engraissement de 60-65 °SR.

Cette pâte est alors diluée jusqu'à 3 % avec les effluents du second étage de lavage, puis essorée dans le premier lavage jusqu'à 12 %. Cet étage est composé de vis inclinées avec des paniers à trous de diamètre 1,4 mm de façon à produire un effluent ayant une concentration d'environ 0,8 %. La pâte essorée sortant du premier étage de lavage est soumise à deux autres lavages à contre courant et la pâte finale présente les caractéristiques suivantes : blancheur : 59-60 °ISO, engraissement : 46-50 °SR, taux de charges minérales : 2-3 %, concentration : 12-14 %. Cette pâte représente une quantité de 78 % en poids de la quantité à laver fournie par le traitement (5), et est utilisée exclusivement pour la fabrication de papier journal et d'annuaires téléphoniques. La différence (22 %) est contenue dans l'effluent du premier étage de lavage qui est caractérisé par : concentration : 0,8-1 %, taux de charge 20-25 %, blancheur : 35-40 °ISO, engraissement 80 °SR.

A titre de vérification de l'aptitude au désencrage de cette pâte secondaire, on a effectué l'hyperlavage d'un échantillon en laboratoire sur tamis de 6 200 mailles/cm² et l'on a obtenu une blancheur de 56 °ISO, donc très proche de la blancheur de la pâte principale.

On ajoute ensuite à cette pâte secondaire 4 % en poids d'un agent collecteur pré-saponifié à haute concentration (type Removink F de Chemicart) en maintenant la température du mélange à 30 °C pendant 5 minutes. Le mélange est ensuite traité dans une cellule de flottation conventionnelle ouverte du type produit par la société Voith en un seul étage pendant 10 à 15 minutes. La perte en poids due à la mousse de la cellule est de 15 à 20 % de la pâte secondaire, soit 3 à 4,5 % par rapport à la pâte totale.

L'alcalinité résiduelle doit être alors abaissée, et l'on ajoute environ 1 % d'acide sulfurique sur l'aspiration de la pompe qui alimente le filtre à disques (12), de façon à reporter le pH entre 7 et 8.

La pâte à filtrer possède alors une blancheur de 53-56 °ISO, un taux de charges minérales de 15-20 % et un engraissement de 78-80 °SR.

Le filtre à disques (12), du type Polydisk, doit être dimensionné sur la base d'un coefficient spécifique de filtration de 20 litres/minute/m². En outre, les dispositifs de décollement du matelas fibreux doivent être alimentés avec de l'air et non de l'eau, afin d'obtenir une concentration la plus haute possible à la sortie du filtre à disques.

En utilisant les paramètres cités ci-dessus, on obtient une concentration finale de 8-10 %, ainsi qu'un filtrat clair contenant moins de 100 ppm de solides en suspension (mesuré sur filtre papier bande noire).

Cette pâte secondaire est ensuite réacidifiée à pH = 6 avant d'être envoyée dans un cuvier de stockage d'où elle est prélevée par pompage d'une façon continue et contrôlée suivant les dosages désirés, en fonction des qualités requises pour le papier fini (journal ou annuaire jaune et blanc).

Le filtrat clair est entièrement recyclé pour effectuer la dilution de la pâte épaissie par le second étage de lavage, le complément étant fourni par de l'eau fraîche ne contenant pas d'ions libres aluminium.

L'intérêt d'un tel procédé appliqué à une machine unique de production de papier réside dans le fait de pouvoir :

a) maintenir engraissement et taux de charges constants au cours d'une même fabrication indépendamment de la matière première et pouvoir ainsi travailler à vitesse et rendement maxima ;

b) faire varier rapidement composition et taux de charges lors des changements de fabrication, sans devoir intervenir longtemps à l'avance en amont dans la ligne de désencrage ;

c) utiliser la plus grande quantité possible de pâte désencrée dans le papier à produire par le fait de pouvoir disposer librement de chacune des deux fractions ;

d) produire des pâtes totalement épurées et possédant les mêmes standards de propreté que des pâtes vierges, permettant donc d'utiliser les machines à papier au maximum de leur vitesse et de leur rendement, en particulier par l'absence de contaminants collants ou visqueux.

Exemple 2

La matière première est constituée par un mélange équipondéral de liasses mécanographiques et de vieux livres et archives variés. La pâte désencrée est utilisée dans la fabrication sur plusieurs machines distinctes de papiers d'emballages fins, frictionnés sur machine ou lissés, de papiers fins pour impression, écriture et usage mécanographique.

L'installation est conduite jusqu'à l'épaississement (4) comme pour l'exemple 1, sans qu'il soit toutefois nécessaire d'ajouter la soude et l'agent de désencrage au désintégrateur (2). A l'entrée du traitement de décrochage de l'encre (5) la pâte présente une blancheur d'environ 60 °ISO, un engraissement de 45-50 °SR, et un taux de charges de 20 %. La pâte subit ensuite le traitement de décrochage (5) comme pour l'exemple 1 mais en utilisant les dosages suivants : Removink L = 0,3 %, peroxyde d'hydrogène : 0,5 %, soude caustique : 1 %, silicate de sodium : 3 %. Température, énergie spécifique et durée du traitement restent inchangés. La blancheur à la sortie augmente ainsi de 2 points et l'engraissement varie peu.

La pâte est ensuite lavée en trois étages comme dans l'exemple 1, mais les dimensions des trous des tamis des vis inclinées sont différentes et la concentration de la pâte à l'alimentation des vis inclinées est inférieure (environ 2,5 %). Le premier étage est équipé avec des trous de diamètre 2 mm, le second et le troisième ayant des trous de 1,4 mm. Dans ces conditions, la pâte finale présente une blancheur de 75 °ISO, un engraissement de 25-30 °SR, et un taux de charges inférieur à 3 %.

L'effluent du premier étage de lavage présente une concentration de 1-1,2 %, un taux de charges d'environ 60 %, une « blancheur » d'environ 50 °ISO, et un engraissement de 68-70 °SR.

Dans cette application on a utilisé une cellule de flottation du type produit par la société Swemac à haute concentration et l'on a prélevé de la pâte non désencrée dans le cuvier (6) pour la mélanger à l'effluent du premier lavage, et reporter ainsi la concentration en cellule à 1,5 %. De cette façon, les deux lignes — la primaire à lavage et la secondaire à flottation — ont exactement la même capacité en poids, mais produisent deux pâtes qualitativement totalement différentes.

Ce prélèvement permet en outre de fournir à la ligne secondaire les fibres longues nécessaires pour accomplir la filtration (12). On aurait pu également prélever cette pâte à la fin du lavage, ce qui aurait pu procurer un gain de blancheur de la pâte satellite, mais l'installation de lavage aurait dû alors être dimensionnée pour une production 30 % supérieure.

La flottation est effectuée comme pour l'exemple 1 mais avec seulement 2 % en poids du même agent collecteur. Le temps de flottation peut être maintenu à 10 minutes seulement et la perte en poids ajustée à environ 10 % (soit 5 % par rapport à la pâte totale) en contrôlant la formation de la mousse.

La pâte à filtrer possède une blancheur d'environ 70 °ISO, un taux de charges de 35 à 40 % et un engraissement de 65-70 °SR.

Le filtre à disques, dimensionné à 25 litres/min/m² produit un filtrat clair contenant 70 à 100 ppm de solides en suspension. Les autres phases du procédé sont identiques à l'exemple 1.

L'intérêt d'un tel procédé appliqué à une papeterie possédant plusieurs machines produisant des types différents comme dans le cas présent réside dans le fait de pouvoir :

a) produire une pâte ayant caractéristiques mécaniques et de pureté voisines de celles d'une pâte chimique vierge et donc utilisable en grande quantité pour produire les papiers fins, légers, à haute résistance propres et aptes à la friction sur cylindre yankee ;

b) produire une pâte ayant les caractéristiques mécaniques et optiques d'un mélange de pâte chimique fine et/ou de pâte mécanique, et de charges minérales, et donc utilisable pour produire des papiers d'impression, d'écriture, à haute opacité et aptes au lissage sur et hors machine ;

c) disposer de ces deux composants d'une façon continue, séparée et contrôlée, tout en partant d'une matière première de composition mal connue ;

d) réunir ces deux composants dans les proportions fort différentes de celles de la matière première comme pour l'exemple 1.

Exemple 3

La matière première est constituée d'un mélange de vieux papiers imprimés de basse qualité, contenant des revues, des vieux livres et cahiers en vrac, des journaux, toutes sortes de déchets de bureaux et d'imprimerie dans les proportions variables.

L'utilisateur est une machine unique de production de carton multicouches utilisé pour la fabrication des boîtes pliantes dont la couverture est couchée sur machine afin d'offrir une excellente aptitude à l'impression polychrome offset. Dans ce cas, la pâte primaire est le seul composant de la couche supérieure (top liner) et toute pâte secondaire produite entre dans la composition de la sous-couche (underliner).

Dans cette installation, le défibrage a lieu en continu dans les mêmes conditions que pour l'exemple 1. Le traitement d'épuration (3) est toutefois réduit à une simple centrifugation en deux étages à haute concentration (supérieure à 3 %) à travers un hydrocyclone et un turboséparateur. L'épaississement (4) travaille alors entre 3 % et 30 % en deux étapes : de 3 % à 15 % avec des vis inclinées (identiques à celles utilisées dans les étages de lavage (8)) et de 15 % à 30 % avec une presse à vis.

Les contaminants fins seront ultérieurement dispersés lors du traitement (5) de décrochage de l'encre, et ensuite entraînés dans la pâte secondaire où ils y resteront, le but étant de produire du « poids » et du « volume », la qualité optique de la sous-couche n'ayant que peu d'importance.

A l'entrée du traitement de décrochage (5), la pâte présente une blancheur de 50 °ISO et un taux de charges de 25 % environ. A la sortie de ce traitement, conduit avec les mêmes paramètres que pour l'exemple 1, la blancheur est tombée à 46-48 °ISO (ce qui témoigne de la mise en dispersion d'une très grande quantité de pigments).

L'élimination de l'encre est ensuite conduite en deux étages de lavage seulement, alimentés à concentration de 2,5 %. Les vis inclinées ont des paniers à trous de diamètre 1,6 mm et l'effluent est en tous points similaire à celui de l'exemple 1.

La pâte primaire présente une blancheur de 68 °ISO, un taux de charges d'environ 4 % et un engraissement d'environ 45-50 °SR. L'épuration fine de cette pâte a lieu en tête de la machine à carton, ce qui ne pose aucun problème car la majeure partie des contaminants fins a déjà été perdue lors du lavage.

Le traitement de la pâte secondaire est lui aussi simplifié. Le temps de la flottation sélective peut être réduit de moitié, ainsi que le dosage du collecteur car la blancheur n'a qu'une influence indirecte (de troisième ordre) sur le carton fini. On a observé qu'une blancheur finale d'environ 50 °ISO de la pâte secondaire était suffisante pour conserver 80 °ISO sur le carton couché fini, lorsque la couche supérieure avant couchage possède une blancheur de 70 °ISO. Lors de la fabrication de cartons de qualité plus basse, on a même éliminé tout agent chimique de flottation.

L'intérêt d'un tel procédé appliqué à une formation stratifiée de papiers ou de cartons réside dans le fait de pouvoir :

a) utiliser une matière première de basse valeur marchande et largement disponible, en remplacement de pâtes chimiques ou de vieux papiers triés et sélectionnés ;

b) simplifier la ligne principale par l'absence d'épuration fine ;

c) augmenter le rendement global matière, grâce au transfert dans la pâte satellite (sous-couche) des contaminants fins indésirables dans la couche supérieure, tout en les maintenant dans le poids total.

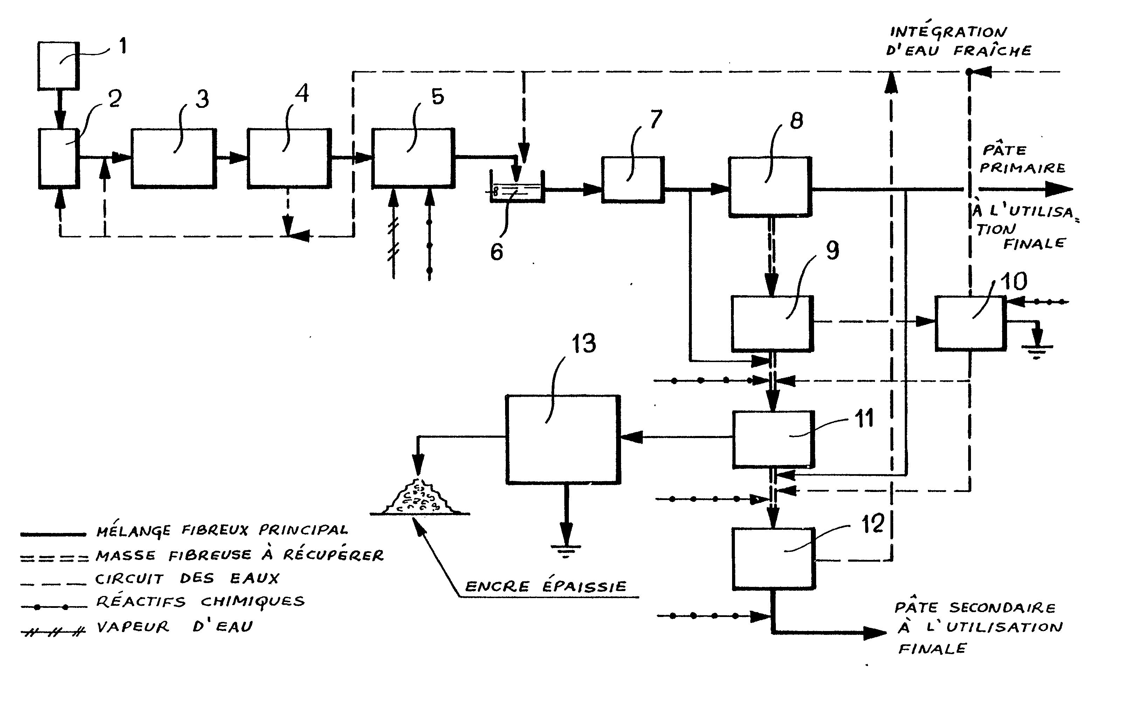

**Revendications**

1. Procédé de traitement de vieux papiers imprimés et contaminés en vue de leur recyclage pour la fabrication de papiers ou de cartons, caractérisé en ce que la matière première subit les traitements suivants :

a) défibrage en milieu aqueux de préférence à pH neutre ou peu alcalin, à froid ou température ambiante, par application d'une faible énergie spécifique, de préférence inférieure à 50 KWH/tonne, de façon à produire une suspension fibreuse pompable dans laquelle les contaminants autres que l'encre ont été décrochés mais non dispersés dans la masse fibreuse ;

b) élimination des contaminants autres que l'encre de la masse fibreuse par moyens mécaniques, en utilisant des épurateurs conventionnels centrifuges ou à classage ;

b₁) épaississement à la concentration requise dans la phase suivante ;

c) ramollissement des véhicules de l'encre d'imprimerie et affaiblissement de leurs liaisons avec la surface des fibres en soumettant la pâte, à une concentration supérieure à 15 %, aux actions simultanées de (A) la haute température — entre 85 et 130 °C — (B) intenses forces de cisaillement et (C) au moins un agent chimique de désencrage, le tout en présence d'une forte alcalinité de préférence avec pH supérieur à 9 ;

d) décrochage des particules d'encre de la surface des fibres et mise en dispersion fine et stable de ces particules au sein de la masse fibreuse grâce aux actions simultanées de (A) la haute température — entre 85 et 130 °C — (B) très intenses forces de cisaillement et (C) au moins un agent chimique de dispersion, le tout en présence d'une forte alcalinité de préférence avec pH supérieur à 9 ; la durée totale des traitements c) et d) étant comprise entre 2 et 10 minutes ;

e) élimination des particules d'encre ainsi décrochées et mises en dispersion, par le moyen connu le plus approprié et selon la blancheur requise par l'utilisation finale de la pâte.

2. Procédé selon la revendication 1 caractérisé en ce que le défibrage et le décrochage des contaminants autres que l'encre a lieu à froid ou à température ambiante.

3. Procédé selon la revendication 1 caractérisé en ce que l'énergie spécifique appliquée à la suspension fibreuse pendant le défibrage a) est inférieure à 50 KWH/tonne pendant environ 20 minutes.

4. Procédé selon la revendication 1, caractérisé en ce que les traitements de ramollissement, de décrochage et de dispersion de l'encre c) et d) ont lieu à une pression supérieure à la pression atmosphérique.

5. Procédé selon la revendication 1 caractérisé en ce que la durée des traitements c) et d) est comprise entre 3 et 5 minutes.

6. Procédé selon la revendication 1 caractérisé en ce que l'énergie spécifique totale appliquée lors des traitements de ramollissement, décrochage et dispersion c) et d) est comprise entre 50 et 100 KWH/tonne, de préférence 80 KWH/tonne.

7. Procédé selon la revendication 1 caractérisé en ce que les traitements de ramollissement, décrochage et dispersion c) et d) ont lieu dans un seul et unique appareil, comme par exemple un triturateur ou désintégrateur.

8. Procédé selon la revendication 1 caractérisé en ce que les traitements de ramollissement, décrochage et dispersion c) et d) ont lieu dans deux appareils distincts, comme par exemple un tube de chauffage suivi d'un disperseur.

9. Procédé selon la revendication 1 caractérisé en ce que l'élimination e) des particules d'encre de la masse fibreuse a lieu au moyen d'un lavage, d'une flottation, ou de toute combinaison de ces deux procédés.

10. Procédé selon la revendication 1 caractérisé en ce que l'alcalinité de la suspension fibreuse est réalisée par addition de l'un quelconque ou d'un mélange des produits chimiques suivants : hydroxyde de sodium, hydroxyde de calcium, hydroxyde de magnésium, carbonate de sodium, phosphate de sodium, tripolyphosphate de sodium, pyrophosphate de sodium, silicate de sodium.

11. Procédé selon la revendication 1 caractérisé en ce que l'on introduit un agent oxydant lors des traitements de ramollissement et dispersion à hautes concentration et température c) et d).

12. Procédé selon les revendications 1 et 11, caractérisé en ce que l'on procède à un blanchiment de la masse fibreuse simultanément aux traitements de ramollissement et décrochage c) et d).

13. Procédé selon la revendication 1 caractérisé en ce que la concentration de la suspension fibreuse lors des traitements de ramollissement et dispersion c) et d) est comprise entre 25 % et 30 %.

14. Procédé selon la revendication 1, caractérisé en ce qu'on obtient après l'élimination des particules d'encre de la masse fibreuse ainsi que la plupart des éléments fins et quelques fibres moyennes et longues, au moyen d'un ou plusieurs étages de lavage en milieu alcalin : (A) une pâte primaire à blancheur et classification fibreuse constantes et contrôlées à taux de charges minérales très faible et constant et (B) une pâte secondaire contenant un taux de charges très élevé et variable, une quantité variable de fibres fines, un peu de fibres longues et toute l'encre éliminée de la pâte primaire, et on soumet la masse fibreuse aux traitements suivants :

d) neutralisation des agents de dispersion introduits précédemment et introduction dans la pâte secondaire d'agents hydrophobes collecteurs de l'encre, suivi de l'élimination des particules d'encre de la suspension fibreuse au moyen d'une séparation sélective en milieu alcalin ;

e) réduction de l'alcalinité de la pâte secondaire par addition d'insolubilisants non basiques et d'acides minéraux, de façon à rendre filtrable la suspension fibreuse secondaire ;

f) filtration de la suspension fibreuse sur couche filtrante réalisée avec les fibres du même procédé, de façon à produire : (B) une pâte secondaire désencrée possédant un fort taux de charges et une structure fibreuse fine, et (C) un filtrat clair pratiquement exempt de matières en suspension ;

g) dilution de la pâte primaire épaissie par l'avant dernier étage de lavage avec le filtrat clair (C) produit précédemment en f) de façon à fermer le circuit des eaux ;

h) stockage de la pâte secondaire filtrée et épaissie dans un cuvier pendant plusieurs heures où elle sera soumise à forte agitation et mélange par recirculation afin de l'homogénéiser et niveler les fluctuations de taux de charges, de classification et d'engraissement.

15. Procédé selon la revendication 14 caractérisé en ce que l'élimination des particules d'encre de la pâte secondaire est effectuée au moyen d'une flottation sélective au milieu alcalin.

16. Procédé selon la revendication 15, caractérisé en ce que les agents hydrophobes collecteurs de l'encre sont composés d'un ou plusieurs acides gras supérieurs ou de leurs sels de sodium ou de calcium.

17. Procédé selon les revendications 15 et 16 caractérisé en ce que l'alcalinité est obtenue par l'addition d'un quelconque ou d'un mélange quelconque des produits chimiques suivants : hydroxyde de sodium, hydroxyde de calcium, hydroxyde de magnésium, carbonate de sodium, phosphate de sodium, tripolyphosphate de sodium, pyrophosphate de sodium, silicate de sodium.

18. Procédé selon la revendication 14 caractérisé en ce que la concentration de la pâte secondaire lors du traitement de séparation sélective de l'encre d) est maintenue entre 0,6 % et 1,5 % et de préférence entre 1 % et 1,2 %.

19. Procédé selon la revendication 18, caractérisé en ce que l'on prévoit une augmentation de la concentration de la pâte secondaire à l'entrée du traitement de séparation sélective de l'encre d) au moyen de pâte épaisse prélevée à l'entrée du premier étage de lavage.

20. Procédé selon la revendication 14 caractérisé en ce que la concentration de la pâte secondaire à l'entrée de la filtration f) est maintenue entre 0,8 % et 2 % ; de préférence entre 1,2 % et 1,5 %.

21. Procédé selon la revendication 20, caractérisé en ce que l'on prévoit une augmentation de la concentration de la pâte secondaire à l'entrée de la filtration f) au moyen de pâte primaire épaisse prélevée à la sortie du lavage.

22. Procédé selon les revendications 19 et 21, caractérisé en ce que l'augmentation de concentration est obtenue grâce au dimensionnement et à l'optimisation des espaces vides ou des trous des éléments d'égouttage des appareils de lavage.

23. Procédé selon la revendication 22, caractérisé en ce que les appareils de lavage sont constitués de vis inclinées dont les grilles perforées ont des trous de diamètre 1,2 à 2,2 mm, de préférence de 1,4 à 2 mm.

24. Procédé selon la revendication 14 caractérisé en ce que le silicate de sodium présent dans la pâte secondaire est précipité avant la filtration f) par addition d'un cation insolubilisant.

25. Procédé selon la revendication 24 caractérisé en ce que le cation utilisé pour la précipitation du silicate de sodium est choisi parmi les métaux terreux du troisième groupe, comme par exemple le calcium sous forme d'hydroxyde ou de chlorure, le magnésium sous forme d'hydroxyde, exception faite de l'aluminium et ses composés.

26. Procédé selon la revendication 14 caractérisé en ce que la filtration f) de la pâte secondaire a lieu sur une toile en mouvement lent et à faible débit spécifique, de façon à créer une couche filtrante épaisse qui sera ensuite décollée de la toile.

27. Procédé selon la revendication 26 caractérisé en ce que le débit spécifique est déterminé de façon à ce que le filtrat clair ne possède pas plus de 150 ppm de matières en suspension, de préférence moins de 100 ppm.

28. Procédé selon la revendication 26 caractérisé en ce que le débit spécifique est déterminé de façon à ce que la pâte secondaire filtrée soit épaissie à une concentration supérieure à 5 %, de préférence 10 %.

29. Procédé selon les revendications 27 ou 28, caractérisé en ce que l'appareillage de filtration est un filtre à disques dimensionné selon un débit spécifique compris entre 15 et 30 litres/min/m², de préférence entre 20 et 25 litres/min/m².

30. Procédé selon la revendication 28 caractérisé en ce que le décollement du matelas fibreux de la toile en mouvement est effectué à l'aide d'un jet d'air comprimé mélangé à de l'eau.

## Claims

1. A method of treating a mixture of printed and contaminated waste paper in order to produce pulps for use in the manufacture of paper and paper boards, characterised in that the raw material is subjected to the following treatments :

a) forming an aqueous fibrous suspension of said waste paper at a neutral or slightly alkaline pH, in cold conditions or at room temperature, by applying a low specific energy, preferably lower than 50 KWH/ton, to form a pumpable slurry wherein the contaminants other than ink have been released by not dispersed inside the fibrous suspension ;

b) removing the non-ink contaminants from the fibrous suspension by mechanical means, using conventional centrifugal cleaners or screens ;

b1) thickening at the consistency required by the next step ;

c) softening the ink vehicles and weakening their binding with the surface of the fibers by submitting the fibrous suspension at a consistency of more than 15 % to the simultaneous actions of (A) a high temperature — between 85 and 130 degrees C. — (B) high shear forces and (C) at least one de-inking chemical agent, under strong alkaline conditions at a pH preferably higher than 9 ;

d) detaching the ink particles from the surface of the fibers and producing a fine and stable dispersion of these particles into the fibrous suspension by submitting the fibrous suspension to the simultaneous action of (A) high temperature — between 85 and 130 degrees C. — (B) very high shear forces and (C) at least one chemical dispersing agent, under strong alkaline conditions at a pH preferably higher than 9, limiting the total duration of the steps c) and d) to a range comprised between 2 and 10 minutes ;

e) removing the previously detached and dispersed ink particles by the most appropriate known method to provide the degree of brightness required in the final product of the pump from the fibrous suspension.

2. The method of claim 1 characterised in that the operations of forming the aqueous fibrous suspension and releasing the non ink contaminants are conducted in cold conditions or at room temperature.

3. The method of claim 1 characterised in that the specific energy applied to the fibrous suspension during the defibering step a) is lower than 50 KWH/ton during approximately 20 minutes.

4. The method of claim 1 characterised in that the ink softening, detaching and dispersing steps c) and d) are conducted at a pressure higher than the atmospheric pressure.

5. The method of claim 1 characterised in that the total duration of steps c) and d) is kept between 3 and 5 minutes.

6. The method of claim 1 characterised in that the total specific energy applied during the softening, detaching and dispersing steps c) and d) is kept between 50 and 100 KWH/ton, preferably 80 KWH/ton.

7. The method of claim 1 characterised in that the softening, detaching and dispersing steps c) and d) are achieved simultaneously in only one apparatus, such as for example a triturator or a disintegrator.

8. The method of claim 1 characterised in that the softening, detaching and dispersing steps c) and d) are achieved separately in two different pieces of equipment, such as for example a heating chamber followed by a disperser.

9. The method of claim 1 characterised in that the removing of the ink particles step e) is achieved by washing, flotation, or by any combination of these two processes.

10. The method of claim 1 characterised in that the alkalinity of the fibrous suspension is obtained by adding any one of the following chemicals : sodium hydroxide, calcium hydroxide, magnesium hydroxide, sodium carbonate, sodium phosphate, sodium tripolyphosphate, sodium pyrosphate, sodium silicate.

11. The method of claim 1 characterised in that an oxidising agent is added during the ink softening and dispersing steps c) and d) at high consistency and high temperature.

12. The method of claim 1 and claim 11 characterised in that a bleaching action is achieved during the ink softening and detaching steps c) and d).

13. The method of claim 1 characterised in that the ink softening and detaching steps c) and d) are achieved at a consistency between 25 % and 30 %.

14. The method of claim 1 characterised in that an alkaline washing is applied in order to remove the ink particles from the fibrous suspension together with most of the fine material and few medium and long fibers which produces : (A) a primary pulp having a constant and controlled brightness and fiber classification together with a very low and constant mineral filler content and (B) a secondary pump containing a high and variable filler content, a variable content of fine fibers, few long fibers together with the whole quantity of ink removed from the primary pulp, and where the fibrous suspension is submitted to the following treatments :

d) neutralizing the dispersing agents previously introduced into the fibrous suspension and adding into the secondary pulp hydrophobic ink-collecting agents, then removing the ink particles from the fibrous suspension by means of a selective alkaline separation ;

e) reducing the alkalinity of the secondary pulp by adding cationic insolubilizing chemicals and mineral acids, thereby producing a filtrable slurry ;

f) filtrating the fibrous suspension on a fibrous mat composed of fibers coming from the same process, thereby producing (B) a secondary de-inked pump having a high filler content and a fine fibrous structure and (C) a clear filtrate almost free of suspended solids ;

g) diluting the primary pulp thickened by the last but one washing stage with the clear filtrate (C) previously produced at step f) thereby closing the water circuit ;

h) storing the filtrated and thickened secondary pulp in a vat during several hours where thorough mixing is achieved by agitation and ricirculation, thereby levelling off the fluctuations of the filler content, of the fiber classification and of the freeness.

15. The method of claim 14 characterised in that the removing of the ink particles from the secondary pump is achieved by means of a selective flotation under alkaline conditions.

16. The method of claim 15 characterised in that the hydrophobic ink collecting agents are composed of one or a mixture of several high molecular weight fatty acids, or their sodium or calcium salts.

17. The method of claim 15 and 16 characterised in that the alkalinity of the fibrous suspension is obtained by adding any one or a mixture of the following chemicals : sodium hydroxide, calcium hydroxide, magnesium hydroxide, sodium carbonate, sodium phosphate, sodium tripolyphosphate, sodium pyrophosphate, sodium silicate.

18. The method of claim 14 characterised in that the consistency of the secondary pump during the ink removing step d) is kept between 0.6 % and 1.5 % and preferably between 1 % and 1.2 %.

19. The method of claim 18 characterised in that the consistency of the secondary pulp during the ink removing step d) is increased by adding thick pulp extracted from the fibrous suspension ahead of the first washing stage.

20. The method of claim 14 characterised in that the consistency of the secondary pulp entering the filtration step f) is kept between 0.8 % and 2 % and preferably between 1.2 % and 1.5 %.

21. The method of claim 20 characterised in that the consistency of the secondary pump during the filtration step f) is increased by adding thick primary pulp extracted from the fibrous suspension after washing.

22. The method of claims 19 and 21 characterised in that the increasing of the consistency is obtained by designing and optimizing the size of the openings or of the holes of the draining elements of the washing apparatus.

23. The method of claim 22 characterised in that the washing apparatus is composed of inclined screws fitted with perforated plates wherein the diameters of the holes are varying between 1.2 and 2.2 mm, preferably between 1.4 and 2 mm.

24. The method of claim 14 characterised in that the sodium silicate present in the secondary pulp has been precipitated by adding an insolubilizing cationic agent before the filtration step f) is achieved.

25. The method of claim 24 characterised in that the cation used for precipitating the sodium silicate is chosen among the third group of earth metals, such as for example the calcium under the form of hydroxide or chloride, the magnesium under the form of hydroxide, with exception of the aluminium and its associated complexes.

26. The method of claim 14 characterised in that the filtration of the secondary pump step f) is achieved upon a slowly moving fabric and at a low specific flow rate in order to create a thick filtering mat which will be then peeled away from the fabric.

27. The method of claim 26 characterised in that the specific flow rate is designed in order to ensure that the clear filtrate does not contain more than 150 ppm of suspended solids, preferably less than 100 ppm.

28. The method of claim 26 characterised in that the specific flow rate is designed in order to insure that the consistency of the secondary filtrated and thickened pulp is kept above 5 %, preferably 10 %.

29. The method of claims 27 or 28 characterised in that the filtering apparatus is a disc filter sized according to a specific flow rate comprised between 15 and 30 liters/min/m$^2$, preferably between 20 and 25 liters/min/m$^2$.

30. The method of claim 28 characterised in that the peeling of the fibrous mat away from the moving fabric is achieved using compressed air mixed with water.

**Patentansprüche**

1. Verfahren zur Aufarbeitung von bedrucktem und verunreinigtem Altpapier zwecks Wiederverwendung zur Herstellung von Papier oder Pappe, dadurch gekennzeichnet, daß das Rohmaterial folgenden Behandlungsstufen unterworfen wird :

a) Zerfaserung in wässeriger Phase, möglichst bei neutralem oder schwach alkalischem pH in der Kälte oder bei Zimmertemperatur durch Anwendung niedriger spezifischer Energie — vorzugsweise unter 50 KWH/Tonne — dergestalt, daß eine pumpbare Fasersuspension erzeugt wird, in der die Verunreinigungen, außer der Druckfarbe, getrennt, aber nicht in der Fasermasse dispergiert werden ;

b) Mechanische Trennung der Verunreinigungen außer der Druckfarbe von der Fasermasse unter Benutzung konventioneller Zentrifugal-oder Sortierreiniger ;

b₁) Eindickung auf die Konsistenz, die in der folgenden Stufe benötigt wird ;

c) Aufweichung der Druckfarbenteilchen und Schwächung ihrer Bindung an die Oberfläche der Fasern, in dem man den Faserbrei von einer Konzentration oberhalb 15 % gleichzeitig (A) hoher Temperatur — zwischen 85 und 130 °C — (B) starken Scherkräften und (C) wenigstens einem chemischen Dispergiermittel in stark alkalischem Milieu von einem pH über 9 unterwirft ;

d) Ablösung der Druckfarbenteilchen von der Faseroberfläche und Herstellung einer feinen und stabilen Dispersion dieser Teilchen in der Fasersuspension durch gleichzeitige Anwendung von (A) hoher Temperatur — zwischen 85 und 130 °C — (B) sehr intensiven Scherkräften und (C) wenigstens von einem chemischen Dispergiermittel, alles in stark alkalischem Milieu, vorzugsweise bei einem pH oberhalb 9, wobei man die Einwirkungszeit der Stufen « c » und « d » auf 2 bis 10 Minuten begrenzt.

e) Elimination der so abgelösten und dispergierten Druckfarbenteilchen durch eines der bekannten Verfahren, das die Anforderungen an die Weißgradigkeit des aus der Faserstoffsuspension herzustellenden Endproduktes erfüllt.

2. Verfahren nach Anspruch 1, dadurch gekennzeichnet, daß die Zerfaserung und die Abtrennung der nicht die Druckfarben betreffenden Verunreinigungen in der Kälte oder bei Zimmertemperatur stattfindet.

3. Verfahren nach Anspruch 1, dadurch gekennzeichnet, daß die zur Zerfaserung der Faserstoffsuspension nach Verfahren a) aufgewandte spezifische Energie während ungefähr 20 Minuten Einwirkzeit niedriger als 50 KWH/Tonne ist.

4. Verfahren nach Anspruch 1, dadurch gekennzeichnet, daß die Verfahrensschritte zur Aufweichung, Ablösung und Dispergierung der Druckfarbenteilchen c) und d) bei einem höheren als dem atmosphärischen Druck stattfinden.

5. Verfahren nach Anspruch 1, dadurch gekennzeichnet, daß die Einwirkungsdauer der Verfahrensschritte c) und d) zwischen 3 und 5 Minuten liegt.

6. Verfahren nach Anspruch 1, dadurch gekennzeichnet, daß die gesamte aufgewandte spezifische Energie zur Aufweichung, Ablösung und Dispersion nach Verfahrensschritt c) und d) zwischen 50 und 100 KWH/Tonne liegt, vorzugsweise 80 KWH/Tonne.

7. Verfahren nach Anspruch 1, dadurch gekennzeichnet, daß die Verfahrensschritte c) und d), Aufweichen, Ablösen und Dispergieren in einem einzigen Gerät. z. B. einem Triturateur oder Zerfaserer ablaufen.

8. Verfahren nach Anspruch 1, dadurch gekennzeichnet, daß die Verfahrensschritte c) und d), Aufweichen, Ablösen und Dispergieren in zwei verschiedenen Geräten, z. B. einem Heizrohr gefolgt von einem Dispergierapparat erfolgen.

9. Verfahren nach Anspruch 1, dadurch gekennzeichnet, daß die Trennung e) der Druckfarbenteilchen von der Fasermasse durch eine Wäsche, eine Flotation oder einer Kombination beider Verfahren erfolgt.

10. Verfahren nach Anspruch 1, dadurch gekennzeichnet, daß der alkalische pH der Fasersuspension durch Addition einer der folgenden Chemikalien allein oder in Mischung eingestellt wird : Natriumhydroxyd, Kalziumhydroxyd, Magnesiumhydroxyd, Natriumkarbonat, Natriumphosphat, Natriumtripolyphosphat, Natriumpyrophosphat, Natriumsilikat.

11. Verfahren nach Anspruch 1, dadurch gekennzeichnet, daß man bei den Schritten c) und d) der Druckfarbenquellung und Dispersion ein Oxydationsmittel bei hoher Konsistenz und Temperatur zusetzt.

12. Verfahren nach Anspruch 1, dadurch gekennzeichnet, daß man die Fasermasse gleichzeitig mit den Verfahrensschritten der Quellung und Ablösung c) und d) einer Bleiche unterwirft.

13. Verfahren nach Anspruch 1, dadurch gekennzeichnet, daß die Konzentration der Fasersuspension bei den Verfahrensschritten Quellung und Dispersion c) und d) zwischen 25 % und 30 % gehalten wird.

14. Verfahren nach Anspruch 1, dadurch gekennzeichnet, daß durch eine oder mehrere alkalische Wäschen die Druckfarbenteilchen und der größte Teil der kurzen Fasern, nebst einigen mittellangen und langen Fasern entfernt werden, was A) zu einem primären Fasergrundstoff konstanter und kontrollierbarer Weißgradigkeit und Faserzusammensetzung führt, der mit geringen und konstanten anorganischen Füllmaterialien beaufschlagt ist und B) zu einem zweiten Fasergrundstoff, der einen hohen und variabelen Füllstoffanteil enthält, sowie eine variabele Menge feiner und einige lange Fasern und die Gesamtmenge der Druckfarben, die vom primären Fasergrundstoff abgetrennt wurde. Diese zweite Fasergrundstofflösung wird nun folgenden Verfahrensschritten unterworfen :

d) Neutralisation der zuvor zugefügten Dispergierungsmittel, Addition Druckfarben bindender hydrophober Substanzen und ihre anschließende selektive Trennung von der suspendierten Fasermasse in alkalischem Milieu ;

e) Reduktion der Basizität der zweiten Fasergrundstofflösung durch Addition nicht basischer Fällungsreagentien und Mineralsäuren, dergestalt, daß eine filtrierbare Fasersuspension entsteht ;

f) Filtration der Fasersuspension durch eine Faserschicht, die aus Fasern des selben Prozesses besteht, was zu B) einem zweiten, von Druckfarbenteilchen befreiten, Brei hoher Füllstoffkonzentration und feiner Faserstruktur führt und C) ein klares Filtrat ergibt, das praktisch frei von suspendierten Teilchen ist.

g) Verdünnen des primären, eingedickten Fasergrundstoffbreis auf der Stufe der vorletzten Wäsche mit dem klaren Filtrat C), das unter f) anfiel, um den Wasserkreislauf zu schliessen.

h) Lagerung des filtrierten und eingedickten Faserbreis B) während mehrerer Stunden in einem Becken, um ihn durch kräftiges Rühren und Rückführungsmischung zu homogenisieren und Schwankungen der Füllstoffmenge, Klassifikation und Viskosität auszugleichen.

15. Verfahren nach Anspruch 14, dadurch gekennzeichnet, daß die Abtrennung der Druckfarbenteilchen vom sekundären Faserstoffbrei durch selektive Flotation in alkalischem Milieu erreicht wird.

16. Verfahren nach Anspruch 15, dadurch gekennzeichnet, daß als hydrophobe Agentien zur Druckfarbenabtrennung eine oder mehrere höhere Fettsäuren oder ihre Natrium- oder Kalziumsalze verwandt werden.

17. Verfahren nach Anspruch 15 und 16, dadurch gekennzeichnet, daß die Alkalinität durch Addition eines der folgenden chemischen Produkte oder einer Mischung von ihnen erhalten wird : Natriumhydroxyd, Kalziumhydroxyd, Magnesiumhydroxyd, Natriumkarbonat, Natriumphosphat, Natriumtripolyphosphat, Natriumpyrophosphat, Natriumsilikat.

18. Verfahren nach Anspruch 14, dadurch gekennzeichnet, daß die Konzentration des sekundären Faserstoffbreis während der selektiven Abtrennung der Druckfarbenteilchen nach d) zwischen 0,6 % und 1,5 % gehalten wird, wenn möglich zwischen 1 % und 1,2 %.

19. Verfahren nach Anspruch 18, dadurch gekennzeichnet, daß man eine Erhöhung der Konzentration des sekundären Faserstoffbreis vor Verfahrensschritt d) zur selektiven Abtrennung der Druckfarben vorsieht, in dem man eingedickten Brei, der vor der ersten Wäsche abgezogen wurde, zusetzt.

20. Verfahren nach Anspruch 14, dadurch gekennzeichnet, daß die Konzentration des sekundären Faserstoffbreis vor der Filterstufe f) zwischen 0,8 % und 2 % gehalten wird ; vorzugsweise zwischen 1,2 % und 1,5 %.

21. Verfahren nach Anspruch 20, dadurch gekennzeichnet, daß man eine Konzentrationserhöhung des sekundären Faserbreis beim Eingang der Filterstufe f) mittels des eingedickten primären Faserbreis, den man am Ausgang der Wäsche abzieht, vorsieht.

22. Verfahren nach Anspruch 19 und 21, dadurch gekennzeichnet, daß die Konzentrationserhöhung durch die Dimensionierung und Optimierung der Hohlräume und Löcher der Abtropfplatten der Waschanlage erreicht wird.

23. Verfahren nach Anspruch 22, dadurch gekennzeichnet, daß die Waschanlage aus auf schräggestellten Schrauben montierten perforierten Blechen besteht, deren Lochdurchmesser zwischen 1,2 und 2,2 mm — vorzugsweise zwischen 1,4 bis 2 mm — variieren.

24. Verfahren nach Anspruch 14, dadurch gekennzeichnet, daß das in der sekundären Faserstoffsuspension befindliche Natriumsilikat vor der Filterstufe f) durch Addition eines, ein schwerlösliches Silikat bildenden Kations gefällt wird.

25. Verfahren nach Anspruch 24, dadurch gekennzeichnet, daß für die Fällung des Natriumsilikats ein Kation aus der zweiten Hauptgruppe der Erdalkalimetalle verwandt wird, wie z. B. Kalzium als Hydroxyd oder Chlorid und Magnesium als Hydroxyd, Aluminium und seine Verbindungen werden nicht verwandt.

26. Verfahren nach Anspruch 14, dadurch gekennzeichnet, daß die Filtration f) auf einem sich in langsamer Bewegung befindlichen Maschinensieb bei schwacher spezifischer Flußrate stattfindet, dergestalt, daß eine dicke filtrierende Faserschicht entsteht, die später vom Siebband abgelöst wird.

27. Verfahren nach Anspruch 26, dadurch gekennzeichnet, daß die spezifische Flußrate so festgelegt wird, daß das klare Filtrat nicht mehr als 150 ppm fester suspendierter Teilchen enthält, vorzugsweise weniger als 100 ppm.

28. Verfahren nach Anspruch 26, dadurch gekennzeichnet, daß die spezifische Flußrate so eingestellt wird, daß die Konsistenz der filtrierten und eingedickten sekundären Faserstoffmasse mehr als 5 % beträgt, wenn möglich 10 %.

29. Verfahren nach Anspruch 27 oder 28, dadurch gekennzeichnet, daß zum filtern ein Scheibenfilter benutzt wird, dessen Größe der spezifischen Flußrate von 15 bis 30 Litern/min/m², möglichst zwischen 20 und 25 Litern/min/m², angepaßt ist.

30. Verfahren nach Anspruch 28, dadurch gekennzeichnet, daß die Fasermatte von dem beweglichen Siebband mittels Preßluft gemischt mit Wasser abgelöst wird.

0 092 124